# EUROPEAN PATENT SPECIFICATION

(11) **EP 2 607 745 B1**
(45) Date of publication and mention of the grant of the patent: **04.10.2017**
(21) Application number: 12188902.6
(22) Date of filing: 17.10.2012
(51) Int. Cl.: F16F 15/32, G01M 1/32

(54) **Balance weight for vehicle wheels**
Auswuchtgewicht für Fahrzeugräder
Poids d'équilibrage pour roues de véhicule

(30) Priority: 20.03.2012 EP 12160442; 13.07.2012 EP 12176440; 23.12.2011 DE 102011089874; 30.12.2011 EP 11196226
(43) Date of publication of application: 26.06.2013
(73) Proprietor: WEGMANN automotive GmbH & Co. KG, 97209 Veitshöchheim (DE)
(72) Inventor: DIETMAR WAGENSCHEIN, 97209 Veitshöchheim (DE); HANS-ULRICH BÜRGEL, 97849 Roden (DE)
(74) Representative: Lohr, Georg

(56) References cited:
- DE-U1- 7 920 660
- FR-A- 1 382 299
- GB-A- 1 052 217
- JP-A- 55 119 247
- US-A- 4 554 734

## Description

### Field of the invention

The invention relates to a balancing weight, an assembly of a plurality of such balancing weights and a process for feeding balancing weights to a balancing machine, all for use in association with the balancing of vehicle wheels.

### Description of the related art

The balancing of vehicle wheels is a well-known technique. Basically two kinds of balancing weights are in use. The first kind of balancing weights is fixed by a clamp, as disclosed in European patent EP 1 613 876 B1, while the second kind is fixed by means of a self-adhesive tape, as disclosed in US patent 6,364,421 B1. Both kinds of balancing weights are commercially available in a plurality of sizes and shapes. When balancing a vehicle wheel, the proper balancing weight is selected and attached to the rim at the proper position, determined by a balancing machine, which may perform the complete balancing process. Mostly, the balancing weights are supplied as bulk material in different sizes in boxes. The proper balancing weight is selected either by hand or in an automatic process by the balancing machine. Selecting the balancing weight by hand is prone to errors. Feeding an automatic balancing machine with bulk balancing weights requires an operator putting the correct size of the balancing weights in orderly fashion into the magazine of the balancing machine. FR 1052 217 discloses a stack of balancing weights held together by a set of retaining rods.

### Summary of the invention

The problem to be solved by the invention is to improve the foresaid handling of balancing weights.

Solutions of the problem are described in the independent claims. The dependent claims relate to improvements and preferred embodiments of the invention.

According to a first aspect to the invention a balancing weight having a first face adapted to be fitted onto an inner peripheral surface of the rim and a second face opposing the first face, is characterized in that the balancing weight comprises at least one guideway for a connecting means for stacking a plurality of such balancing weights.

Hence, a plurality of such balancing weights can easily be stacked, either manually or by a packing machine to form packs.

Preferably, the guideway is a traverse channel running from the first to the second face of the balancing weight. The term "channel" is to be understood in a broad sense, including but not limited to a hole or a notch, having a circular or non-circular cross-section. For instance, the balancing weight may have an open notch in its narrow side and preferably a further notch in its opposite narrow side for receiving the connecting means, made from a material and with a cross-section such that it secures a plurality of such balancing weights to form a sufficiently stable stack.

Specifically, if the balancing weight has a single channel, such channel preferably has a polygonal cross-section for receiving the connecting means, the latter having a complementary cross-section, such that the balancing weights are kept together in the stack in an oriented manner.

In addition or alternatively, the first and the second face may have complementary profiles for aligning subsequent balancing weights in the stack. For example, the first face of the balancing weight may have one or more indentations and the second face may have one or more complementary projections.

In a preferred embodiment the balancing weight has at least two spaced apart channels.

The channel, respectively each channel can simply be a through-hole. Such hole may be formed in a moulding process of the balancing weight. Alternatively, the through-hole may be punched or drilled.

The balancing weight will form a stable stack, if each balancing weight has at least two through-holes, provided lengthwise an axis of symmetry of the balancing weight, which usually has an elongated contour or shape.

In a preferred embodiment the balancing weight has at least one notch, running perpendicular to a lengthwise axis of the balancing weight. The cross section and the depth of the notch (or each notch) depend on its purpose: The notch or notches may either serve to ease the bending of the balancing weight in one or two axis in order to better conform to the curvature of the rim. Alternatively or additionally the notch (or notches) may define a predetermined breaking line, permitting to sever one or both its end-sections from the remainder of the balancing weight in case a balancing weight of lesser mass than that of the original balancing weight is required.

The invention is not limited to a certain type of material or construction of a balancing weight. In a preferred embodiment it consists of metal, usually zinc, having a mono-layer or multi-layer coating, comprising a self-adhesive face, which will then constitute the first face that is to say the face for fitting the balancing weight onto the rim, the self-adhesive face being protected by a tear-off liner.

In another aspect, the invention relates to an assembly, comprising a plurality of balancing weights in any of the embodiments described above, and further comprising a connecting means, wherein the balancing weights are arranged in identical orientation to form a stack and held together by the connecting means.

Preferably, the connecting means is a cord. The term "cord" is to be understood in a broad sense, comprising into alia a braid, wire or band of suitable material like metal, natural or synthetic fibers. However, if the balancing weights have a single channel (e.g. a through-hole) with polygonal cross-section and therefore requiring a connecting means with a complementary cross-section in order to maintain alignment of the balancing weights in the stack, the connecting means preferably consists of a synthetic resin.

In a preferred embodiment of the assembly of balancing weights having two spaced apart channels, the connecting means runs from last or uppermost balancing weight through the respective first channels of all balancing weights to the lowermost or first balancing weight and back in the opposite direction to the respective second channels. This simplifies the building of the stack.

In a further embodiment of the assembly the connecting means has a first end-section and a second end-section, both protruding at the same side of the stack and being sealed together close to the last or uppermost balancing weight. This simplifies the handling, specifically the storage and the transport of the stacks or packs.

According to another embodiment, the seal and/or the connecting cord may be colour encoded. Different colours may represent different weights. The storage bin of a pick and place machine or dispenser for balancing weights may have the same colour encoding to simplify allocation. Furthermore, there may be an information tag or banner attached to the connecting cord and/or seal. It may bear information about the weight of the balancing weights and/or may be colour encoded as described above.

In a further aspect, the invention proposes a process for feeding balancing weights to a balancing machine, preferably an automatic balancing machine, wherein the balancing weights being configured to forms stacks, and the balancing machine being configured to receive these stacks. This process contributes to a further automation of the balancing of vehicle wheels.

### Description of Drawings

In the following the invention will be described by way of example, without limitation of the general inventive concept, on examples of embodiment with reference to the drawings.
Figures 1 to 8 show various embodiments of a balancing weight and corresponding connecting means.
Figure 9 is an example of a stack comprising a plurality of balancing weights of a still further embodiment.

Generally, the illustrated balancing weights are in the shape of elongated parallelepipeds of metal or artificial raisin. However, the invention is not limited to balancing weights of parallelepiped form but applies to other shapes, too, no matter whether they are designed for fixing by a clip or by means of a self-adhesive tape.

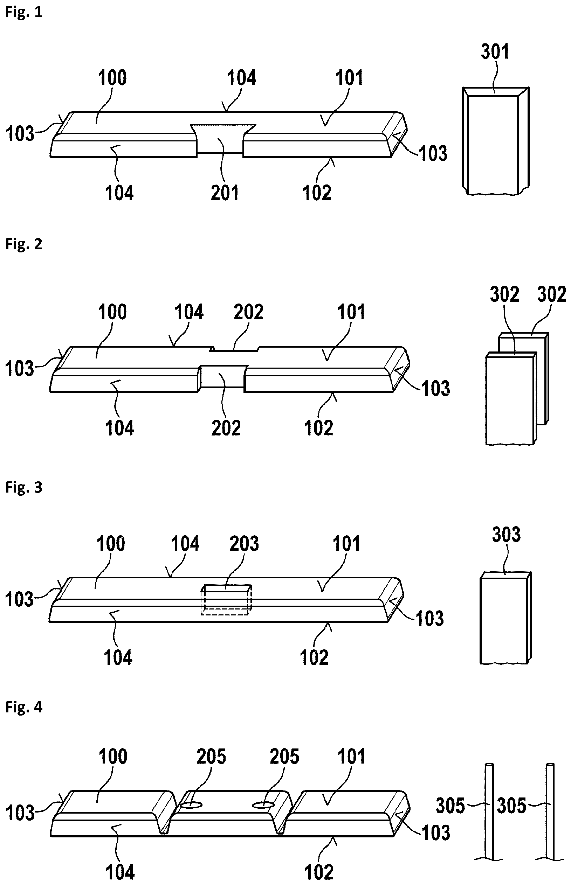

The balancing weight 100 in figure 1 and those in the further figures all have a first face 101 for fitting the balancing weight onto an inner peripheral surface of the rim of a vehicle wheel (not shown), and opposite the first face 101 a second face 102. Further, the balancing weight has two opposing short narrow sides 103 und two opposing long narrow sides 104.

In the long narrow side 104 there is a guideway in the form of an open channel, having the cross-section of a dove tail 201. The dove tailed channel 201 is designed for receiving a connecting strip 301 with complementary trapezoid cross-section. The connecting strip 301 is preferably of moulded or extruded plastic. It permits the stacking of a plurality of balancing weights 100.

The connecting strip 301 may have a first or lower end-section in the form e.g. of a disk in order to a prevent the first or lower most balancing weight from slipping from the connecting strip, and a second or a upper end-section in the form of e.g. a loop or a lug for a picking the stack by a conveyor or other transport means. These details are readily understandable to those skilled in the art and are therefore not shown. They may also apply to the further embodiments of the connecting means described below.

In figure 2 the balancing weight has two opposing open channels 202 of rectangular open cross-section at the respective long narrow sides. Each channel 202 is designed for receiving a respective connecting strip 302 with rectangular cross-section. To be noted that the thickness of the connecting strips 302 may be much smaller than the depth of the rectangular channels 202.

In figure 3 the balancing weight has a single guideway in the form of an oblong through-hole 203, designed for receiving a connecting band 303, which may be much thinner than the width of the oblong through-hole 203. Further, in this embodiment the balancing weight has on its upper surface a self-adhesive face 110, protected by a tear-off liner (not shown), the self-adhesive face being the first face as defined in association with figure 1.

In figure 4 the balancing weight has has two spaced apart guideways in the form of cylindrical through-holes 205 for receiving a connecting cord or rod 305. The balancing weight shown herein has three segments which are separated by notches or grooves which simplify bending and adapting of the balancing weight to the radius of the rim. This embodiment is not limited to three segments as shown herein. It may have any number of segments including one. All other embodiments of balancing weights shown herein may also comprise segments.

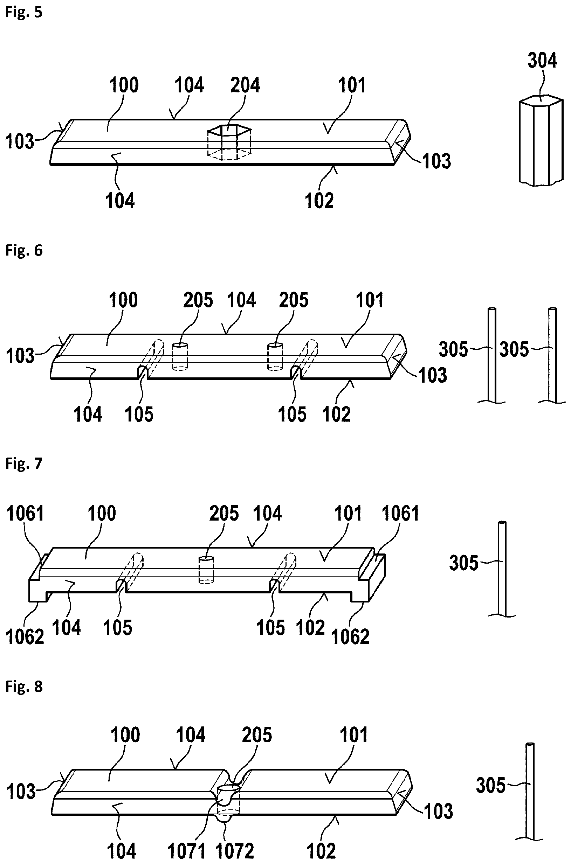

In figure 5 the balancing weight has a guideway in the form of a hexagonal through-hole 204 for receiving a connecting rod 304 with corresponding hexagonal cross-section.

In figure 6 the balancing weight has two spaced apart guideways in the form of cylindrical through-holes 205, each for receiving a connecting cord 305. The cord 305 may consist of a flexible material. Alternatively, it may be a solid or braided metal wire. In this embodiment the balancing weight also has two spaced apart notches 105 in the lower or second face, the notches 105 running perpendicular to a lengthwise axis of the balancing weight and enabling easy bending of the balancing weight in order to better conform to the contour of the rim, alternatively for defining a predetermine break line, for severing one or both its end-sections form the center part of the balancing weight.

Whereas in the embodiments in figures 1 to 6 the cross-section of the guideway in cooperation with the cross-section of the respective connecting means warrants the proper alignment of the balancing weights in the stack, figures 7 and 8 illustrate embodiments warranting the alignment of the balancing weight in the stack by the shape of the balancing weight its self, i.e. by providing its first and its second face with mating indentations and protrusions, respectively.

In figure 7 the balancing weight has a single central cylindrical through-hole 205 for a connecting cord 305 and opposing stepped short upper edges 1061 and opposing complementary protruding short lower edges 1062, such that the stepped short upper edges 1061 will receive the protruding short lower edges 1062 of the adjacent above balancing weight (not shown). The balancing weight has the same type of traverse notches 105 as shown in figure 6.

In figure 8 the balancing weight also has a single central through-hole 205 for a connecting cord 305. Proper alignment of adjacent balancing weights is warranted by a traverse groove 1071 in the first face and a complementary traverse bulge 1072 in the second face.

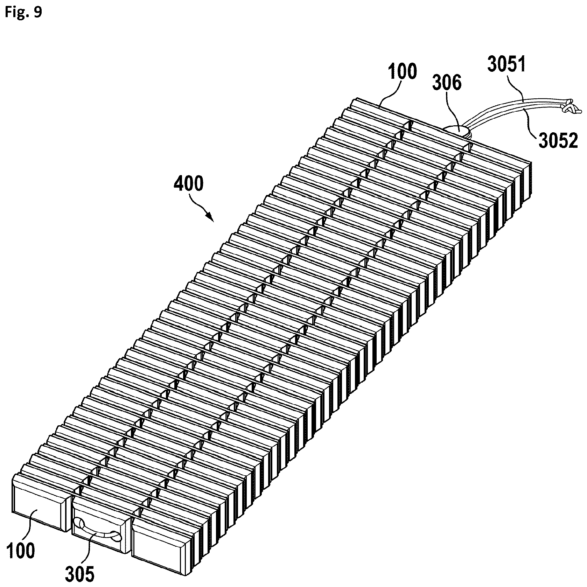

Figure 9 illustrates a stack 400 comprising a large number of balancing weights 100, held together by a double ended connecting cord 305, running to respective spaced a part a through-holes in the balancing weights. The connecting cord 305 has a first end-section 3051 and a second end-section 3052, protruding from the last balancing weight. Close to the last balancing weight, the two end-sections are held together by a seal 306, such that the stack 400 has sufficient stability, specifically for storage and/or handling by a conveyor, which may feed the stack to a magazine of a balancing machine (not shown). The seal and/or the connecting cord may be colour encoded. Different colours may represent different weights. The storage bin of a pick and place machine or dispenser for balancing weights may have the same colour encoding to simplify allocation. Furthermore, there may be an information tag or banner attached to the connecting cord and/or seal. It may bear information about the weight of the balancing weights and/or may be colour encoded as described above.

### List of reference numerals

- 100: balancing weight
- 101: first face
- 102: second face
- 103: short narrow side
- 104: long narrow side
- 105: notch
- 1061: stepped short upper edge
- 1062: protruding short lower edge
- 1071: groove
- 1072: bulge

- 110: self adhesive layer

- 201: dove tail channel
- 202: rectangular channel
- 203: oblong through-hole
- 204: hexagonal through-hole
- 205: cylindrical through-hole

- 301: connecting strip with trapezoid cross-section
- 302: connecting strip with rectangular cross-section
- 303: connecting band
- 304: connecting rod with hexagonal cross-section
- 305: connecting cord
- 3051: first end-section
- 3052: second end-section
- 306: seal

- 400: stack

## Claims

1. Assembly comprising a plurality of balancing weights for vehicle wheels,
the balancing weights (100) having a first face (101; 110) for fitting the balancing weight onto an inner peripheral surface of the rim of the wheels and a second face (102), opposing the first face,
the balancing weights (100) comprise at least one guideway (201 to 205) for a connecting means (301 to 305) for stacking a plurality of the balancing weights, and
the balancing weights (100) are arranged in identical orientation and held together by the connecting means (301 to 305) to form a stack (400)
**characterized in, that**
the connecting means is a cord (305).

2. Assembly according to claim 1,
**characterized in, that**
the balancing weights have two spaced apart channels (205), wherein the connecting means (305) runs from the last or uppermost balancing weight through the respective first channels of all balancing weights to the lowermost or first balancing weight and back in the opposite direction through the respective second channels.

3. Assembly according to any of the claims 1 or 2,
**characterized in, that**
the connecting means (305) has a first end-section (3051) and a second end-section (3052), both protruding at the same side of the stack (400) and being sealed together close to the last or uppermost balancing weight.

4. Assembly according to any of the claims 1 to 3,
**characterized in, that**
the connecting means and/or a seal are colour encoded, wherein each colour represents a specific weight of the balancing weights.

5. Assembly comprising a plurality of balancing weights for vehicle wheels,
the balancing weights (100) having a first face (101; 110) for fitting the balancing weight onto an inner peripheral surface of the rim of the wheels and a second face (102), opposing the first face,
the balancing weights (100) comprise at least one guideway (201 to 205) for a connecting means (301 to 305) for stacking a plurality of the balancing weights,
the balancing weights (100) are arranged in identical orientation and held together by the connecting means (301 to 305) to form a stack (400), the balancing weights have two spaced apart channels (205), **characterized in, that**
the connecting means (305) has a first end-section (3051) and a second end-section (3052), both protruding at the same side of the stack (400) and being sealed together close to the last or uppermost balancing weight.

6. Assembly according to claim 5,
**characterized in, that**
the connecting means and/or a seal are colour encoded, wherein each colour represents a specific weight of the balancing weights.

7. Process for feeding balancing weights (100) to a balancing machine,
wherein the balancing weights being configured to form stacks (400) according to any one of the previous claims, and the balancing machine being configured to receive said stacks (400).

## Patentansprüche

1. Anordnung umfassend eine Vielzahl von Auswuchtgewichten für Fahrzeugräder, wobei
die Auswuchtgewichte (100) eine erste Fläche (101; 110) zum Einpassen des Auswuchtgewichts auf eine innere Umfangsfläche der Räder, und eine der ersten Fläche gegenüberliegende zweite Fläche (102) aufweisen, die Auswuchtgewichte (100) mindestens eine Führungsbahn (201 bis 205) für ein Verbindungsmittel (301 bis 305) zum Stapeln einer Vielzahl der Auswuchtgewichte aufweisen, und
die Auswuchtgewichte (100) in gleicher Ausrichtung angeordnet sind und durch Verbindungsmittel (301 bis 305) zusammengehalten werden, um einen Stapel zu bilden (400),
**dadurch gekennzeichnet, dass**
das Verbindungsmittel eine Schnur (305) ist.

2. Anordnung nach Anspruch 1,
**dadurch gekennzeichnet, dass**
die Auswuchtgewichte zwei beabstandete Kanäle (205) aufweisen, wobei das Verbindungsmittel (305) vom letzten oder obersten Auswuchtgewicht durch die entsprechenden ersten Kanäle aller Auswuchtgewichte zum untersten oder ersten Auswuchtgewicht und zurück in die entgegengesetzte Richtung durch die entsprechenden zweiten Kanäle verläuft.

3. Anordnung nach einem der Ansprüche 1 oder 2,
**dadurch gekennzeichnet, dass**
das Verbindungsmittel einen ersten Endabschnitt (3051) und einen zweiten Endabschnitt (3052) aufweist, welche beide auf der gleichen Seite des Stapels (400) hervorstehen und nahe dem letzten oder obersten Auswuchtgewicht miteinander versiegelt sind.

4. Anordnung nach einem der Ansprüche 1 bis 3,
**dadurch gekennzeichnet, dass**
das Verbindungsmittel und/oder eine Versiegelung farbcodiert sind, wobei jede Farbe ein bestimmtes Gewicht der Auswuchtgewichte darstellen.

5. Anordnung umfassend eine Vielzahl von Auswuchtgewichten für Fahrzeugräder, wobei die Auswuchtgewichte (100) eine erste Fläche (101; 110) zum Einpassen des Auswuchtgewichts auf eine innere Umfangsfläche der Räder, und eine der ersten Fläche gegenüberliegende zweite Fläche (102) aufweisen,
die Auswuchtgewichte (100) mindestens eine Führungsbahn (201 bis 205) für ein Verbindungsmittel (301 bis 305) zum Stapeln einer Vielzahl solcher Auswuchtgewichte aufweisen,
die Auswuchtgewichte (100) in gleicher Ausrichtung angeordnet sind und durch Verbindungsmittel (301 bis 305) zusammengehalten werden, um einen Stapel zu bilden (400),
die Auswuchtgewichte zwei beabstandete Kanäle (205) haben, **dadurch gekennzeichnet, dass**
das Verbindungsmittel (305) einen ersten Endabschnitt (3051) und einen zweiten Endabschnitt (3052) aufweist, welche beide auf der gleichen Seite des Stapels (400) hervorstehen und nahe dem letzten oder obersten Auswuchtgewicht miteinander versiegelt sind.

6. Anordnung gemäß Anspruch 5,
**dadurch gekennzeichnet, dass**
das Verbindungsmittel und/oder eine Versiegelung farbcodiert sind, wobei jede Farbe ein bestimmtes Gewicht der Auswuchtgewichte darstellt.

7. Verfahren zum Zuführen von Auswuchtgewichten (100) zu einer Auswuchtmaschine, wobei die Auswuchtgewichte konfiguriert sind, um Stapel (400) nach einem der vorhergehenden Ansprüche zu bilden, und die Auswuchtmaschine konfiguriert ist, um diese Stapel (400) aufzunehmen.

## Revendications

1. Assemblage comprenant plusieurs masses d'équilibrage pour des roues de véhicules,
lesquelles masses d'équilibrage (100) possèdent une première face (101; 110) pour les adapter sur une surface périphérique intérieure de la jante des roues et une deuxième face (102) opposée à la première face,
les masses d'équilibrage (100) comprenant au moins une piste de guidage (201 à 205) pour un moyen de liaison (301 à 305) permettant d'empiler plusieurs masses d'équilibrage, et
les masses d'équilibrage (100) étant disposées selon une orientation identique et retenues ensemble par le moyen de liaison (301 à 305) pour former une pile (400), **caractérisé en ce que** le moyen de liaison est un cordon (305).

2. Assemblage selon la revendication 1, **caractérisé en ce que** les masses d'équilibrage possèdent deux canaux (205) espacés, le moyen de liaison (305) allant de la dernière masse d'équilibrage ou de celle située sur le dessus de la pile, à travers les premiers canaux de toutes les masses d'équilibrage, jusqu'à la première masse d'équilibrage ou celle située en dessous de la pile et revenant en sens inverse à travers les deuxièmes canaux correspondants.

3. Assemblage selon l'une quelconque des revendications 1 ou 2, **caractérisé en ce que** le moyen de liaison (305) possède une première partie d'extrémité (3051) et une deuxième partie d'extrémité (3052) qui dépassent toutes deux du même côté de la pile (400) et sont soudées ensemble près de la dernière masse d'équilibrage ou de celle située sur le dessus de la pile.

4. Assemblage selon l'une quelconque des revendications 1 à 3, **caractérisé en ce que** le moyen de liaison et/ou un soudage sont codés en couleurs, chaque couleur représentant un poids spécifique des masses d'équilibrage.

5. Assemblage comprenant plusieurs masses d'équilibrage pour des roues de véhicule, lesquelles masses d'équilibrage (100) possèdent une première face (101; 110) pour les adapter sur une surface périphérique intérieure de la jante des roues et une deuxième face (102) opposée à la première face,
les masses d'équilibrage (100) comprenant au moins une piste de guidage (201 à 205) pour un moyen de liaison (301 à 305) permettant d'empiler plusieurs des masses d'équilibrage, les masses d'équilibrage (100) étant disposées selon une orientation identique et retenues ensemble par le moyen de liaison (301 à 305) pour former une pile (400),
les masses d'équilibrage possédant deux canaux (205) espacés,
**caractérisé en ce que** le moyen de liaison (305) possède une première partie d'extrémité (3051) et une deuxième partie d'extrémité (3052), qui dépassent toutes deux du même côté de la pile (400) et sont soudées ensemble près de la dernière masse d'équilibrage située ou de celle située sur le dessus de la pile.

6. Assemblage selon la revendication 5, **caractérisé en ce que** le moyen de liaison et/ou un soudage sont codés en couleurs, chaque couleur représentant un poids spécifique des masses d'équilibrage.

7. Procédé pour amener des masses d'équilibrage (100) à une machine d'équilibrage, dans lequel les masses d'équilibrage sont configurées pour former des piles (400) selon l'une quelconque des revendications précédentes et la machine d'équilibrage est configurée pour recevoir lesdites piles (400).
